## Europäisches Patentamt
## European Patent Office
## Office européen des brevets

(11) Veröffentlichungsnummer: **0 163 120**
**B1**

(12) # EUROPÄISCHE PATENTSCHRIFT

(45) Veröffentlichungstag der Patentschrift:
**08.06.88**

(21) Anmeldenummer: **85104960.1**

(22) Anmeldetag: **24.04.85**

(51) Int. Cl.⁴: **F 16 B 13/06**

(54) **Spreizdübel.**

(30) Priorität: **29.05.84 DE 3419968**
**29.11.84 DE 3443503**

(43) Veröffentlichungstag der Anmeldung:
**04.12.85 Patentblatt 85/49**

(45) Bekanntmachung des Hinweises auf die Patenterteilung:
**08.06.88 Patentblatt 88/23**

(84) Benannte Vertragsstaaten:
**AT BE CH FR GB IT LI NL SE**

(56) Entgegenhaltungen:
**EP-A-0 070 976**
**CH-A-559 319**
**CH-A-581 276**
**DE-A-2 135 330**
**DE-A-3 111 504**

(73) Patentinhaber: **fischerwerke Artur Fischer GmbH & Co. KG, Weinhalde 14- 18, D-7244 Tumlingen/Waldachtal 3 (DE)**

(72) Erfinder: **Fischer, Arthur, Dr., Weinhalde 34, D-7244 Waldachtal 3/Tumlingen (DE)**

0 163 120

**Beschreibung**

Die Erfindung betrifft einen Spreizdübel für die Verankerung in vorzugsweise konisch nach innen erweitert hergestellten Bohrlöchern, bestehend aus einem am Bohrlochgrund sich abstützenden, einen Spreizkonus aufweisenden Spreizteil, auf dessen Spreizkonus eine Spreizhülse auftreibbar ist und an dessen dem Spreizkonus gegenüberliegenden Ende Mittel zum Befestigen bzw. Anhängen von Gegenständen angeordnet sind.

Spreizdübel der obengenannten Art werden insbesondere in Decken verwendet, da durch das Auftreiben der Spreizhülse auf den am Bohrlochgrund aufsitzenden Spreizkonus des Spreizteiles eine rißunempfindliche Verankerung erfolgt. Die am Spreizteil angehängte Last sorgt bei einer Erweiterung des Bohrloches aufgrund eines durch die Bohrung verlaufenden Risses für eine Nachspreizung, die den Haltewertsverlust durch die sich öffnende Bohrung ausgleicht, zumindest jedoch erheblich vermindert. Um einerseits die Einschlagenergie beim Auftreiben der Spreizhülse zu reduzieren und andererseits das Aufspreizvermögen zu vergrößern ist es bei dieser Art von Spreizdübeln vorteilhaft, das Bohrloch mit einer sich zum Bohrlochgrund hin erweiternden Hinterschneidung zu versehen.

Bei bekannten Spreizdübeln dieser Art wird in der Regel als Spreizteil ein Stehbolzen mit angestauchtem Spreizkonus verwendet. Das Gewinde des Stehbolzens dient zur Befestigung von Gegenständen oder zum Aufschrauben von Adapterteilen, an die Gegenstände über Drähte, Lochbänder oder dgl. angehängt werden können. Ein derartiger Spreizdübel ist aus der DE-A-31 11 504 bekannt.

Die Herstellung der Stehbolzen und insbesondere der Adapterteile ist sehr kostenaufwendig und im Hinblick auf die bei derartigen Spreizdübeln angestrebte geringe Verankerungstiefe allein aufgrund des Fertigungsverfahrens überdimensioniert.

Aus der DE-A-21 35 331 ist ein Befestigungselement zur Befestigung abgehängter Decken, Rohre oder dgl. bekannt, bei dem das Spreizteil aus einer geprägten Blechplatine hergestellt ist. Das Spreizteil besitzt bei diesem bekannten Befestigungselement keinen kegelförmigen Spreizkonus und ist auch dicht für den Einsatz in konisch nach innen erweitert hergestellten Bohrlöchern vorgesehen.

Der Erfindung liegt daher die Aufgabe zugrunde, den Spreizdübel so zu gestalten, daß eine einfache und kostengünstige Fertigung möglich ist.

Erfindungsgemäß wird dies dadurch erreicht, daß das Spreizteil aus Stahlblech gestanzt, sowie der Spreizkonus aus einer entsprechenden Abwicklung gerollt und den Rollspalt in der Mantelfläche des Spreizkonuses schließend kalibriert ist.

Für die Herstellung des Spreizteiles kann nunmehr ein Stahlblech verwendet werden, wobei das Spreizteil sowohl mit der Abwicklung für den Spreizkonus als auch bereits mit den entsprechenden Mitteln zum Befestigen bzw. Anhängen von Gegenständen ausgestanzt wird. Der Spreizkonus wird anschließend gerollt und zusätzlich auf Formgenauigkeit einerseits und auf vollständige Schließung des Spaltes in der Mantelfläche des Spreizkonuses andererseits kalibriert. Durch die Schließung des Spaltes erhält der Spreizkonus eine Stabilität, die eine Verformung des Spreizkonuses beim Auftreiben der Spreizhülse ausschließt. Die Aufspreizbedingungen sind damit identisch mit denen eines aus einem Vollmaterial geschlagenen Spreizkonuses. Auf den den Spreizkonus mit dem Mittel zum Anhängen von Gegenständen verbindenden Steg des Spreizteiles wird seitlich die ebenfalls gerollte und damit einen durchgehenden Längsschlitz aufweisende Spreizhülse gestülpt. Zur Verankerung wird nunmehr der erfindungsgemäße Spreizdübel in das vorbereitete Bohrloch so weit eingesetzt, bis der Spreizkonus auf dem Bohrlochgrund aufsitzt. Danach wird durch Schläge auf die Stirnseite der Spreizhülse mittels eines über die Anhängelasche schiebbaren Einschlagwerkzeuges die Spreizhülse auf den Spreizkonus aufgetrieben. Über die Anhängelasche können nunmehr Gegenstände wie Kabel, Rohre, Decken und dgl. befestigt bzw. angehängt werden.

In einer weiteren Ausgestaltung der Erfindung kann der sich an den Spreizkonus anschließende Abschnitt des Spreizteiles eine längsverlaufende Profilkerbe aufweisen. Mit dieser Profilkerbe wird eine Versteifung des in der Spreizhülse befindlichen Abschnittes des Spreizteiles erreicht.

Schließlich kann in einer weiteren Ergänzung der Erfindung sich unmittelbar an den Spreizkonus eine Einschnürung des Spreizteiles anschließen. In diese Verengung des Spreizteilsteges werden die Spreizlamellen der Spreizhülse eingebogen. Damit ergibt sich eine Anlaufschräge für die Spreizhülse, die ein Verhaken der Spreizhülse beim Eintreiben des Spreizdübels verhindert und damit das Einschlagen erleichtert. Sobald der Spreizkonus auf dem Bohrlochgrund aufsitzt, wird durch einen etwas kräftigeren Schlag die als Sperre für die Stirnseite der Spreizhülse dienende Einschnürungsbegrenzung überwunden und die Spreizlamellen auf den Spreizkonus aufgetrieben.

In einer weiteren Ausgestaltung der Erfindung kann das Spreizteil im Anschluß an das als Lasche ausgebildete Mittel zum Befestigen von Gegenständen einen im Außenmaß dem Sprelzdübeldurchmesser entsprechender Ansatz aufweisen, der in zwei von der hinteren Stirnseite der Spreizhülse ausgehenden, sich gegenüberliegenden Einschlitzung aufgenommen ist.

Der in den Einschlitzungen der Spreizhülse aufgenommene Ansatz fixiert das Spreizteil in der Mitte der Spreizhülse. Ober die mantelflächige Anlage der Spreizhülse im Bohrloch wird somit auch das Spreizteil über den Ansatz nach allen Richtungen abgestützt. Die verkürzte Abstützung über die Längskanten des Spreizteiles in der Innenbohrung der Spreizhülse wird dadurch ausgeglichen, daß das Spreizteil über den dem Außendurchmesser der Spreizhülse entsprechenden Ansatz zusätzlich an der Bohrlochwandung anliegt.

In einer weiteren Ergänzung der Erfindung kann der Ansatz am Grund wenigstens einer Einschlitzung

2

aufsitzen. Mit dieser Gestaltung wird erreicht, daß beim Setzen des Spreizdübels durch Schläge auf die Aufhängelasche die Spreizhülse auch bei engen Bohrlöchern mitgeführt wird und nicht über das Spreizteil zurückgleitet.

In der Zeichnung ist ein Ausführungsbeispiel der Erfindung dargestellt. Es zeigen:

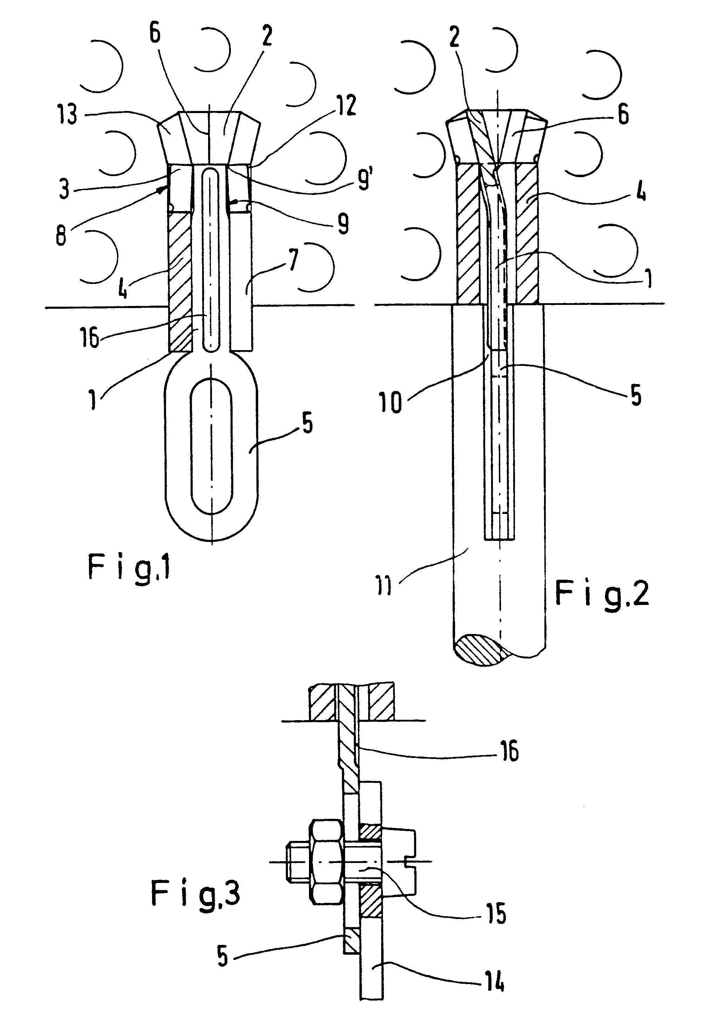

Figur 1 den im Bohrloch eingesetzten Spreizdübel
Figur 2 den verankerten Spreizdübel
Figur 3 die Befestigung eines Gegenstandes an dem Spreizdübel
Figur 4 eine Variante des Spreizdübels
Figur 5 den verankerten Spreizdübel nach Figur 4.

Der Spreizkonus besteht aus dem Spreizteil 1 mit kegelförmigen Spreizkonus 2 und der über einen Teil ihrer Länge mit Längsschlitzen 3 versehenen und aus einem Blech gerollten Spreizdübel 4. Auch das Spreizteil 1 ist aus einem Stahlblech mit der Abwicklung für den Spreizkonus 2 und mit einer Anhängelasche 5 als Mittel zum Befestigen bzw. Anhängen von Gegenständen gestanzt. Zur Bildung des Spreizkonuses 2 wird die entsprechende Abwicklung am Spreizteil so gerollt, daß der Spreizkonus entsteht. Durch Kalibrieren in einer Form wird die Formgenauigkeit des Spreizkonuses 2 einerseits und die vollständige Schließung des Rollspaltes 6 andererseits erreicht. Zum Aufschieben der Spreizhülse 4 auf den Spreizteilabschnitt zwischen Spreizkonus 2 und Anhängelasche 5 wird die Spreizhülse 4 an ihrem durchgehenden Längsschlitz 7 soweit aufgebogen, bis sie über den Spreizteilabschnitt überstülpbar ist. Nach dem Zurückfedern der Spreizhülse entsteht eine unverlierbare Verbindung zwischen Spreizhülse und Spreizteil. Gegebenenfalls ist ein Zusammendrücken der Hülse notwendig, wobei gleichzeitig die Spreizlamellen 8 in die im Spreizteil 1 vorgesehene Einschnürung 9 eingebogen werden. Dadurch entsteht eine Anlaufschräge, die das Verhaken der Spreizhülse 4 beim Eintreiben verhindert.

Zum Verankern des Spreizdübels wird ein mit einer der Anhängelasche 5 angepaßten Einschlitzung 10 versehenes Einschlagwerkzeug 11 vervendet, mit dem auf die Stirnseite der Spreizhülse 4 geschlagen wird. Durch das Anstoßen der gegenüberliegenden Stirnseite der Spreizhülse an der Einschnürungsbegrenzung 9' wird das Spreizteil 1 soweit in das Bohrloch 12 geschoben, bis der Spreizkonus 2 am Bohrlochgrund aufsitz. Nach Oberwindung der Einschnürungsbegrenzung 9' durch einen etwas kräftigeren Schlag werden die Spreizlamellen 8 in den Spalt zwischen der Mantelfläche des Spreizkonuses und der Wandung der Hinterschneidung 13 des Bohrloches 12 eingetrieben und somit der Spreizdübel im Bohrloch verankert.

Als Mittel zum Befestigen bzw. Anhängen von Gegenständen dient die Anhängelasche 5 des Spreizteiles 1. Je nach Ausbildung der Anhängenlasche 5 können an diese Drähte oder Lochbänder 14 eingehängt bzw. mittels einer Befestigungsschraube 15 befestigt werden. Zur Versteifung des Spreizteiles 1 ist zwischen dem Spreizkonus 2 und der Anhängelasche 5 eine längsverlaufende Profilkerbe 16 angeordnet.

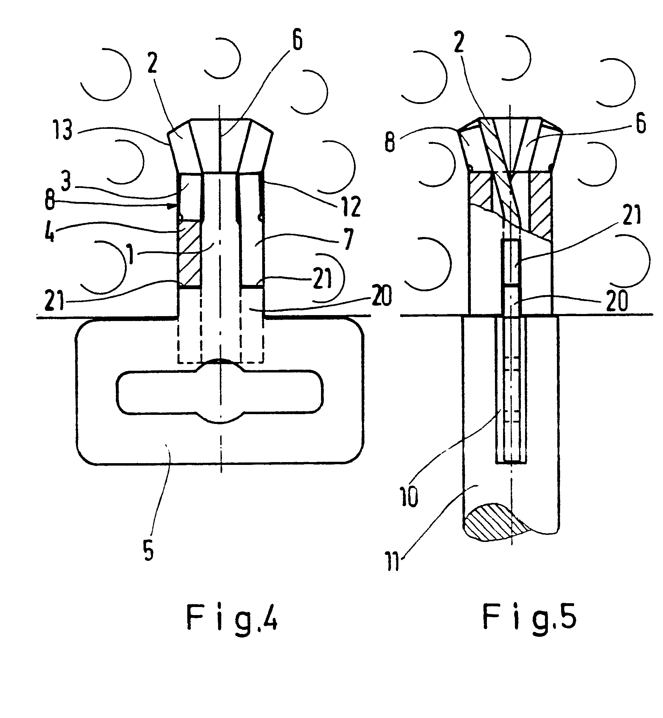

Zur Abstützung des Spreizteiles in der Spreizhülse rechtwinklig zur Laschenebene ist das Spreizteil 1 gemäß Figur 4 und 5 im Anschluß an die Lasche 5 mit einem Ansatz 20 versehen, dessen Außenmaß dem Spreizhülsendurchmesser entspricht. Die Spreizhülse 4 weist zur Aufnahme dieses Ansatzes 20 zwei sich gegenüberliegende, vom hinteren Stirnende der Spreizhülse ausgehende Einschlitzungen 21 auf. Eine dieser Einschlitzungen fluchtet mit dem durchgehenden Längsschlitz der Spreizhülse, wobei dessen lichte Weite jedoch von der der Einschlitzung abweichen kann. Die Länge der den Ansatz aufnehmenden Einschlitzungen 21 ist so bemessen, daß der Ansatz 20 am Grund dieser Einschlitzungen aufsitzt.

**Patentansprüche**

1. Spreizdübel für die Verankerung in vorzugsweise konisch nach innen erweitert hergestellten Bohrlöchern, bestehend aus einem am Bohrlochgrund sich abstützenden, einen Spreizkonus aufweisenden Spreizteil, auf dessen Spreizkonus eine Spreizhülse auftreibbar ist und an dessen dem Spreizkonus gegenüberliegenden Ende Mittel zum Befestigen bzw. Anhängen von Gegenständen angeordnet sind, dadurch gekennzeichnet, daß das Spreizteil (1) aus Stahlblech gestanzt, sowie der Spreizkonus (2) aus einer entsprechenden Abwicklung gerollt und den Rollspalt (6) in der Mantelfläche des Spreizkonuses schließend kalibriert ist.

2. Spreizdübel nach Anspruch 1, dadurch gekennzeichnet, daß der sich an den Spreizkonus (2) anschließende Abschnitt des Spreizteiles (1) eine längsverlaufende Profilkerbe (16) aufweist.

3. Spreizteil nach Anspruch 1, dadurch gekennzeichnet, daß sich unmittelbar an den Spreizkonus (2) eine Einschnürung (9) des Spreizteiles (1) anschließt, in die die Spreizlamellen (8) der Spreizhülse (4) eingebogen sind.

4. Spreizdübel nach Anspruch 1, dadurch gekennzeichnet, daß das Spreizteil im Anschluß an das als Lasche ausgebildete Mittel zum Befestigen von Gegenständen einen im Außenmaß dem Spreizhülsendurchmesser entsprechender Ansatz aufweist, der in zwei von der hinteren Stirnseite der Spreizhülse ausgehenden sich gegenüberliegenden Einschlitzungen aufgenommen ist.

5. Spreizdübel nach Anspruch 4, dadurch gekennzeichnet, daß der Ansatz am Grund wenigstens einer Einschlitzung aufsitzt.

## Claims

1. Expansible plug for anchoring in bore holes prepared such that, preferably, they flare towards the inner end, consisting of an expansion part acting against the bottom of the bore hole and having an expander cone onto which an expansible sleeve may be driven, and at the end of which expansion part opposite the expander cone there are arranged means for fixing or attaching articles, characterized in that the expansion part (1) is punched from sheet steel, and the expander cone (2) is shaped into a roll from a corresponding blank member and the gap (6) in the outer surface of the expander cone is closed up as the cone is brought to size.

2. Expansible plug according to claim 1, characterized in that the portion of the expansion part (1) adjoining the expander cone (2) has a longitudinally extending notch profile (16).

3. Expansible plug according to claim 1, characterized in that immediately adjoining the expander cone (2) there is a constriction (9) of the expansion part (1) into which the expansion blades (8) of the expansible sleeve (4) are bent.

4. Expansible plug according to claim 1, characterized in that, adjoining the means constructed as a lug for the fixing of articles, the expansion part has an auxiliary part corresponding in its external dimension to the diameter of the expansible sleeve, which auxiliary part is received in two opposing slot openings starting from the rearward end of the expansible sleeve.

5. Expansible plug according to claim 4, characterized in that the auxiliary part rests at the base of at least one slot opening.

## Revendications

1. Cheville expansible destinée à l'ancrage dans des trous, percés de préférence avec un élargissement conique vers l'intérieur, cheville constituée par une pièce d'expansion qui s'appuie sur le fond du trou de perçage, et présente un cône d'expansion, sur le cône d'expansion de laquelle une douille d'expansion peut être entraînée et à l'extrémité de laquelle, opposée au cône d'expansion, sont disposés des moyens ou organes pour fixer ou suspendre des objets, cheville caractérisée en ce que la pièce (1) d'expansion découpée dans de la tôle d'acier, ainsi que le cône (2) d'expansion sont enroulés à partir d'un développement correspondant et, pour terminer, la fente (6) de roulage est calibrée pour fermer la surface extérieure du cône d'expansion.

2. Cheville expansible selon la revendication 1, caractérisée en ce que la partie de la pièce (1) d'expansion, qui fait suite au cône (2) d'expansion, présente une rainure (16) profilée longitudinale.

3. Pièce à expansion selon la revendication 1, caractérisée en ce qu'immédiatement à la suite du cône d'expansion se trouve un rétrécissement (9) de la pièce (1) d'expansion, dans lequel les lamelles (8) d'expansion de la douille (4) d'expansion sont courbées.

4. Cheville expansible selon la revendication 1, caractérisée en ce que la pièce d'expansion présente, en prolongement du moyen en forme d'anneau pour fixer des objets, une partie saillante, dont la dimension extérieure correspond au diamètre de la douille d'expansion, et qui est reçue dans deux fentes, opposées l'une a l'autre, et partant de la face frontale opposée de la douille d'expansion.

5. Cheville expansible selon la revendication 4, caractérisée en ce que la partie saillante repose sur le fond d'au moins une fente.

Fig.1

Fig.2

Fig.3

Fig.4

Fig.5